# EUROPÄISCHE PATENTSCHRIFT

(11) **EP 2 979 897 B1**
(45) Veröffentlichungstag und Bekanntmachung des Hinweises auf die Patenterteilung: **26.10.2016**
(21) Anmeldenummer: 14179418.0
(22) Anmeldetag: 01.08.2014
(51) Int. Cl.: B60B 31/00, B60B 31/02, B60B 1/00, B60B 1/02, B60B 1/04

(54) **Vorrichtung und Verfahren zum Fixieren einer Radspeiche**
Apparatus and method for the fixation of a spoke
Dispositif et procédé de fixation d'un rayon de roue

(43) Veröffentlichungstag der Anmeldung: 03.02.2016
(73) Patentinhaber: Rugel, Christoph, 79117 Freiburg (DE)
(72) Erfinder: Rugel, Christoph, 79117 Freiburg (DE)
(74) Vertreter: Tahhan, Nader Isam Mark

(56) Entgegenhaltungen:
- EP-A1- 0 476 749
- WO-A1-2008/007954
- WO-A1-2011/084052
- US-A- 982 259

## Beschreibung

### Einleitung

Die Erfindung betrifft das Gebiet der Vorrichtungen zum Zentrieren von Laufrädern mit Speichen. Genauer betrifft die Erfindung eine Vorrichtung zum Fixieren einer Radspeiche während des Spannens derselben.

### Stand der Technik und Nachteile

Laufräder mit Speichen sind aus dem Stand der Technik seit Langem bekannt. Sie bestehen im Wesentlichen aus den drei Hauptkomponenten "Nabe", "Speichen" und "Felge". Die im Zentrum des Laufrads angeordnete Nabe ist mittels einer Mehrzahl von Speichen mit der Felge verbunden. Durch Anspannen der Speichen üben diese entlang des Umfangs der Felge Zugkräfte auf, die dem Laufrad eine hohe Steifigkeit verleihen. Die Speichen, die dabei gewöhnlich nur Zugkräfte aufnehmen, werden im Bereich der Nabe in Ösen oder dergleichen eingehängt, wofür typischerweise eine Kröpfung am proximalen Ende vorgesehen ist. An ihrem distalen Ende weisen sie hingegen ein Gewinde auf. Dieses wirkt mit einem so genannten Speichennippel (oder kurz Nippel) zusammen, der drehbar in der Felge gelagert ist. Der Nippel weist ein Innengewinde auf, welches das distale Außengewinde der Speiche aufnehmen kann. Drehen des Nippels verändert - je nach Drehrichtung - die Gesamtlänge des aus Nippel und Speiche bestehenden Verbunds und dehnt bzw. entdehnt die Speiche. Auf diese Weise lässt sich die Speichenspannung verändern.

Das Verändern (zunächst insbesondere Erhöhen) der Speichenspannung ist nicht nur initial, also zum "Einspeichen" eines zunächst aus Einzelteilen bestehenden Laufradbausatzes nötig, sondern auch zum Einstellen einer gewünschten Speichenspannung und insbesondere beim so genannten "Zentrieren", also dem Vorgang des Eliminierens von Seiten- und Höhenschlag der Felge, wie er sowohl nach dem Zusammenbau des Laufrads, als auch durch fortwährenden Gebrauch auftritt. Beim Zentrieren wird durch Anspannen oder Entspannen der Speichen die Zugkraft auf die Felge lokal erhöht bzw. verringert, was zu einer entsprechenden Geometrieänderung führt. Primär führt ein Verändern der Spannung einer einzelnen Speiche zu einer Veränderung des Seitenschlags, wohingegen ein (gleichgerichtetes) Verändern der Spannung benachbarter Speichen zu einer Veränderung des Höhenschlags führt. Je nach konkreter Bauart und Qualität des Laufrads beeinflussen sich die beschriebenen Einstelltechniken jedoch auch in gewissem Umfang gegenseitig, da sich einseitig angreifende Zugkräfte nicht nur auf den Seitenschlag, sondern auch auf den Höhenschlag auswirken.

Zum Durchführen des Zentriervorgangs sind verschiedene Hilfsmittel bekannt.

Beim manuellen Zentrieren kontrolliert der Benutzer optisch, vorzugsweise unter Zuhilfenahme von Anschlägen oder dergleichen, das Laufrad abschnittsweise auf Zentrierfehler. Mittels eines Speichenschlüssels, auch "Nippelspanner" genannt, werden dann die Nippel der betreffenden Speichen manuell gedreht und das Ergebnis fortlaufend überprüft. Typischerweise sind daher mehrere Laufradumdrehungen erforderlich, bis das Ergebnis zufriedenstellend ist. Zentrierständer bieten die Möglichkeit, ein einzelnes Laufrad mit seiner Nabe einzuspannen, und weisen im Bereich der Felge entsprechende Anschläge auf, die eine bequeme Kontrolle des Seiten- und Höhenschlages erlauben. Nachteilig an derartigen manuellen Lösungen ist jedoch der recht hohe Zeitaufwand und die Notwendigkeit entsprechender Erfahrung des Benutzers beim Zentrieren.

Daher wurden auch teil- oder vollautomatisch arbeitende Hilfsmittel entwickelt, welche die Kontrolle des Seiten- und Höhenschlags sowie die sich daraus ergebenden Justierarbeiten selbsttätig durchführen. Eine solche Einrichtung ist beispielsweise aus der Druckschrift WO 2006 114087 A2 bekannt. Diese umfasst eine Achshalterung für ein Laufrad, eine Antriebsrolle für dasselbe, eine Einrichtung zur Detektion des lokalen Seiten- und Höhenschlags, sowie eine Einrichtung zum automatisierten Drehen eines Speichennippels. Die Messwerte der Felge werden an eine Recheneinheit weitergeleitet, welche die geeignete Drehrichtung und Umdrehungsanzahl bestimmt. Diese Werte dienen dann der Ansteuerung der Einrichtung zum automatisierten Drehen des Speichennippels.

Ein beim Verändern der Speichenspannung grundsätzlich auftretendes Problem besteht in dem Vorhandensein von Reibungskräften im Gewinde. Um den Nippel relativ zur Speiche zu drehen, muss zunächst die Haftreibung des Gewindes überwunden werden. Sowohl hier als auch bei der sich anschließenden Gleitreibung können die Reibungskräfte einer Bewegung des Nippels im Gewinde entgegenwirken, sodass sich nicht nur der Nippel, sondern auch die Speiche selbst um ihre Längsachse dreht, wodurch eine Torsionsspannung erzeugt wird. Erst beim "Losbrechen" der Speiche verdreht sich diese selbst nicht mehr weiter und kann nun über das am Speichennippel wirkende Drehmoment reine Zugkräfte aufnehmen. Eine tordierte Speiche ist aus verschiedenen Gründen unerwünscht: Zum Einen führt eine Torsion zu einem suboptimalen Anliegen des proximalen Endes in der Öse der Nabe, was zu einem Speichenbruch führen kann. Zum Anderen tendiert eine tordierte Speiche bei stärkeren Vibrationen, wie sie beim Fahren typischerweise auftreten, zum spontanen erneuten "Losbrechen" aus dem Nippel, was zu einem Herausdrehen und gleichzeitigem Entspannen der Speiche führt; eine unbeabsichtigte Verringerung der Speichenspannung und eine Erhöhung des Seiten- bzw. Höhenschlags sind das Resultat. Selbst für den Fall, dass die tordierte Speiche zusammen mit dem Nippel eine gemeinsame, die Torsion reduzierende Drehbewegung (z.B. aufgrund von Vibrationen) vollführt, ist eine Verlängerung der (dann etwas weniger tordierten) Speiche die Folge.

Um diesen Effekt zu vermeiden oder zumindest zu minimieren ist dem Fachmann bekannt, die Drehbewegung des Nippels bewusst etwas weiter als zunächst notwendig auszuführen (zu "überdrehen"), und gleich anschließend eine geringfügige Drehbewegung in die entgegengesetzte Richtung auszuführen. Beim geringfügigen Zurückdrehen verändert die Speiche zwar ihre Position im Gewinde des Nippels aufgrund der Gewindereibung nicht, wird aber aus der zunächst tordierten Position in eine "neutrale" Position gebracht, in welcher nur noch Zugkräfte wirken. Es ist klar, dass dieses Verfahren entsprechende Erfahrung eines manuell arbeitenden Benutzers erfordert. Auch die vorstehend genannte automatisierte Vorrichtung ist in der Lage, entsprechende Ausgleichsbewegungen durchzuführen, was jedoch ebenfalls einen erhöhten Zeit- und Rechenaufwand mit sich bringt, zumal bei einer nicht tordierten Speiche die Speichenspannung auf besonders einfache Weise bestimmt werden kann. Eine möglichst gleichmäßige Zugspannung aller Speichen wiederum ist ein Qualitätsmerkmal für ein nachhaltiges Kräftegleichgewicht des Laufrades mit geringerer Tendenz zu Seiten- und Höhenschlag sowie erhöhter Stabilität der Speichen.

Eine weitere Möglichkeit, um den nachteiligen Effekt der Reibungskräfte im Gewinde und des damit verbundenen Mitdrehens der Speiche um ihre Längsachse zu verringern ist in der Druckschrift WO 2008 007 954 A1 offenbart, welche den nächstliegenden Stand der Technik repräsentiert. In dieser Druckschrift ist eine automatisiert arbeitende Zentriervorrichtung für Laufräder mit Speichen gezeigt. Diese umfasst eine Klemmvorrichtung für eine Speiche, so dass sich die Speiche während des Drehens des Speichennippels nicht drehen kann. Dies führt bereits zu einer Verbesserung des Arbeitsergebnisses.

### Aufgabe der Erfindung und Lösung

Die Aufgabe der Erfindung besteht in einer weiteren Verbesserung des Arbeitsergebnisses, sowie der Verringerung eines Zeitverlusts und des Rechenaufwands im Hinblick auf die vorstehend beschriebenen Arbeitsschritte der Ausgleichsbewegung.

Die Aufgabe wird durch eine Vorrichtung gemäß Hauptanspruch sowie ein Verfahren gemäß Anspruch 10 gelöst. Vorteilhafte Ausführungsformen sind den jeweiligen Unteransprüchen, der Beschreibung und den Figuren zu entnehmen.

### Beschreibung

Nachfolgend wird zunächst die erfindungsgemäße Vorrichtung beschrieben. Im Anschluss daran erfolgt eine Beschreibung des erfindungsgemäßen Verfahrens.

Die erfindungsgemäße Vorrichtung dient dem Fixieren der Speiche eines Laufrades im Rahmen des Spannens dieser Speiche, also zum Zwecke des Spannens oder Zentrierens des Laufrads, oder einfach zum Justieren der Spannung der Speiche. Wie oben bereits beschrieben, geht die Änderung der Speichenspannung mit einem Drehen des mit dieser Speiche verbundenen Speichennippels einher.

Die Vorrichtung umfasst ein Spannmittel mit einem breitenvariablen Klemmspalt mit einer Längsachse, in welchem ein Abschnitt der Speiche aufnehmbar ist. Es ist klar, dass die Breite des Klemmspalts die Dicke der Speiche am zu fixierenden Abschnitt geringfügig übersteigen muss, damit die Speiche überhaupt in den Klemmspalt eingebracht werden kann. Da bei den meisten Laufrädern die Speichennippel in der Felge angeordnet sind, ist der zu fixierende Abschnitt vorzugsweise distal (also in der Nähe der Felge); für den Fall, dass der Speichennippel in der Nabe angeordnet ist, ist der Abschnitt vorzugsweise proximal (also in der Nähe der Nabe).

Ferner ist im Wege des Antreibens des Spannmittels der Klemmspalt so weit verkleinerbar, dass der Abschnitt der Speiche vom Spannmittel kraft- und/oder formschlüssig fixierbar ist. Mit anderen Worten, die Speiche wird vom Spannmittel fixiert, indem sie entweder entlang eines Abschnitts ihrer Längsachse geklemmt wird (bevorzugt bei Speichen mit rundem Querschnitt), oder der Abschnitt wird mittels einer Form umschlossen, so dass eine Rotation der Speiche gehemmt wird (sinnvoll bei Speichen mit nicht-rundem Querschnitt wie z.B. Schwertspeichen / Säbelspeichen). Selbstverständlich sind auch Kombinationen aus kraft- und formschlüssigem Fixieren möglich.

Außerdem weist die Vorrichtung in Richtung der Längsachse des Klemmspalts verschiebbare Spannflächen auf.

Erfindungsgemäß ist vorgesehen, dass der Abschnitt rotatorisch festgelegt und in längsaxialer Richtung bewegbar ist, so dass eine Bewegung der Speiche in Richtung ihrer Längsachse ermöglicht ist.

Durch das Fixieren der Speiche in einem dem Speichennippel vorzugsweise nahen Abschnitt derselben kann sich diese beim Drehen des Nippels nicht mehr merklich tordieren. Somit entfällt auch die Notwendigkeit der eingangs beschriebenen Ausgleichbewegung, ebenso ein zur Bestimmung derselben notwendiger Rechenaufwand. Bei einer Messung der Speichenspannung kann davon ausgegangen werden, dass sich diese beim anschließenden Benutzen des Laufrads nicht mehr ändert, da kein Setzen aufgrund der tordierten, sich dann entspannenden Speiche zu befürchten ist. Somit verbessert sich die Qualität und Lebensdauer eines mit dem erfindungsgemäßen Verfahren spannungs-optimierten Laufrades.

Nachfolgend wird die Erfindung unter Zuhilfenahme der weiteren Figuren detailliert erläutert.

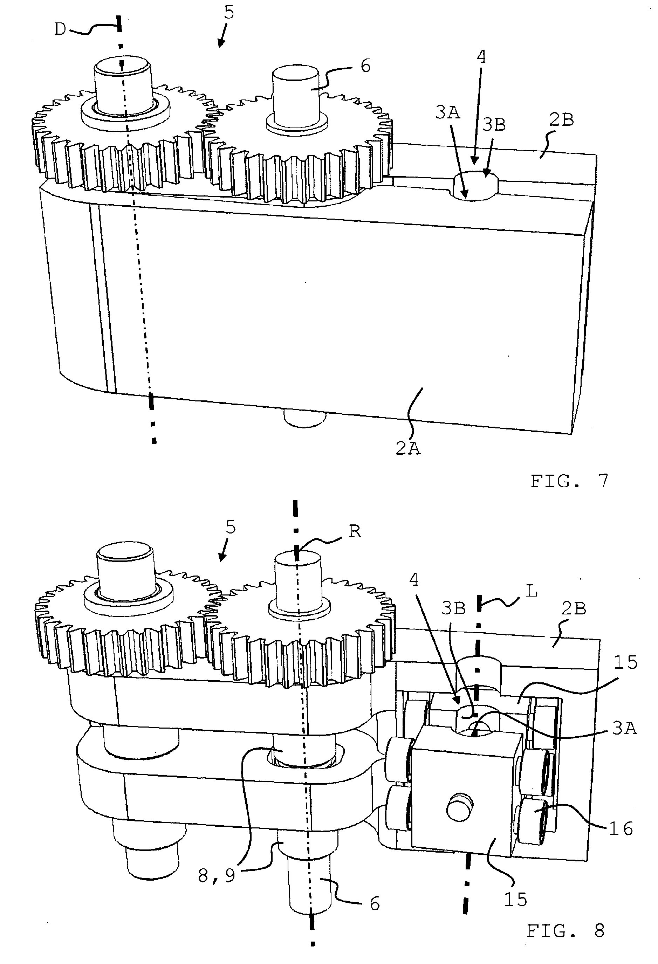

Erfindungsgemäß weist die Vorrichtung ferner in Richtung der Längsachse L des Klemmspalts 4 verschiebbare Spannflächen 3A, 3B auf. Bevorzugt liegen diese in Aufnahmen 15, welche beweglich gelagert sind und sich an den Innenseiten der Spannbacken 2A, 2B abstützen. Eine solche Konstruktion ist der **Fig. 8** entnehmbar. Nach dieser Ausführungsform sind die Aufnahmen 15 als Wagen ausgebildet, in denen eine an die Speichenform angepasste Vertiefung vorhanden ist, die sich entlang der Längsachse L erstreckt. Damit diese Wagen einerseits die hohen Klemmkräfte aufnehmen können, andererseits dabei entlang der Längsrichtung L gleiten können, stützen sich diese mittels (vorliegend vier) Wälzlagern 16 (nur eines mit Bezugszeichen versehen) in entsprechenden Aussparungen der Spannbacken 2A, 2B ab.

Aufgrund der in Richtung der Längsachse L des Klemmspalts 4 wirkenden Verschiebbarkeit kann eine fest geklemmte Speiche, die gespannt wird, wodurch sich deren distales Ende in oder entgegen der Richtung der Längsachse zu verlagern sucht, sich auch tatsächlich in diese Richtung verlagern. Die Spannflächen 2A, 2B können somit unter Vermeidung zusätzlicher Messfehler auf die Längsachse der Speiche einwirken, indem sie ihre Rotation und damit Torsion verhindern, gleichzeitig aber ihre Translation und damit die in der Speiche wirkenden Zugkräfte nicht behindern, welche durch den Schraubvorgang entstehen, der zum Messen und Justieren der Speiche notwendig ist. Somit werden unerwünschte Messfehler vermieden.

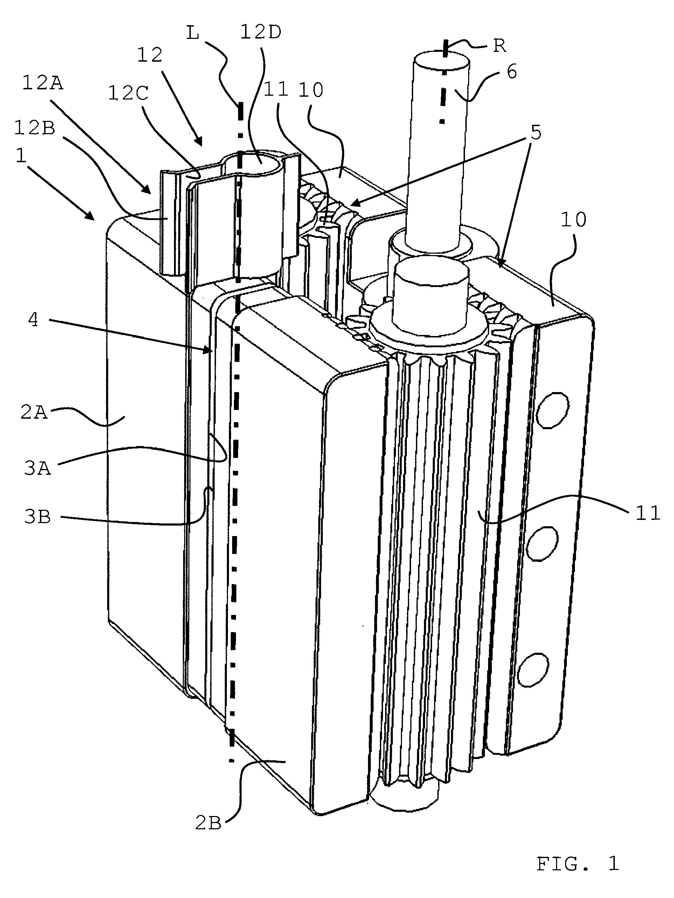

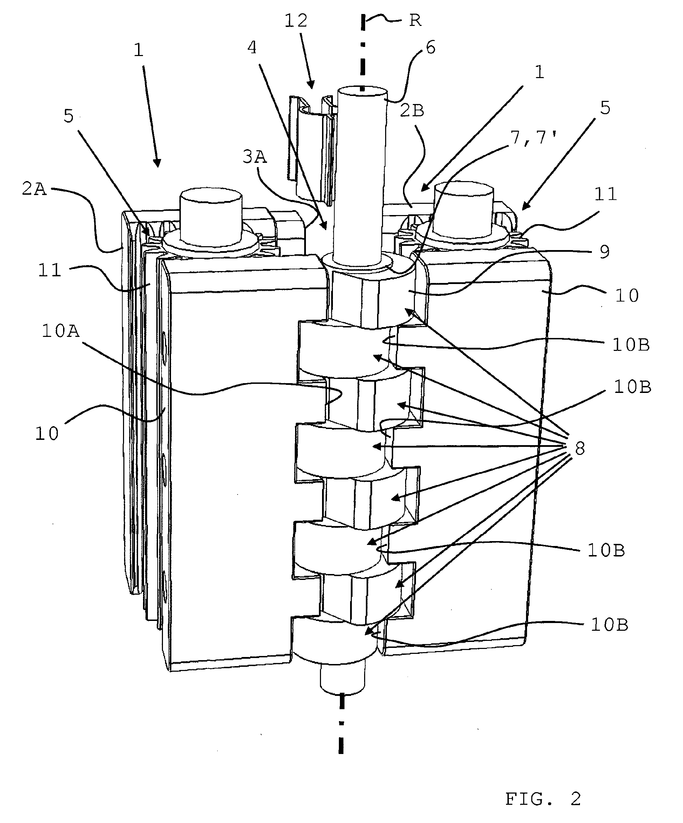

In der **Fig. 1** **und** **Fig. 2** ist eine bevorzugte Ausführungsform der erfindungsgemäßen Vorrichtung schräg von vorn-oben (Fig. 1) bzw. schräg von hinten-oben (Fig. 2) in perspektivischer Ansicht dargestellt. Fig. 1 zeigt die Vorrichtung mit weitgehend angenäherten Spannbacken (kleiner Spalt 4), Fig. 2 mit weitgehend entfernten Spannbacken (großer Spalt 4). Demnach umfasst das Spannmittel 1 zwei Spannbacken 2A, 2B. Jede dieser Spannbacken 2A, 2B weist jeweils eine Spannfläche 3A, 3B für die Speiche (nicht dargestellt) auf. Dabei sind die Spannbacken 2A, 2B mit ihren Spannflächen 3A, 3B derart (und vorliegend auch parallel) beabstandet zueinander angeordnet, dass sich zwischen den Spannflächen 3A, 3B der oben genannte Klemmspalt 4 für die Speiche (nicht gezeigt) ergibt, deren Längsachse in etwa kollinear mit, oder zumindest parallel zu, der Längsachse L des Klemmspaltes 4 verläuft.

Die gezeigte Ausführungsform ist demnach vor allem für das kraftschlüssige Fixieren einer Speiche mit vorzugsweise rundem Querschnitt geeignet. Würde zumindest eine der Spannflächen 3A oder 3B eine formschlüssig mit der Speiche zusammenwirkende Vertiefung / Erhöhung aufweisen, so wäre das Spannmittel 1 besonders gut zum formschlüssigen Fixieren beispielsweise einer Säbelspeiche geeignet.

Durch geeignete Materialwahl für die Spannbacken 2A, 2B, beispielsweise durch Einsatz von gummielastischem Material, wird zusätzlich eine reibschlüssige Verbindung mit der Oberfläche der Speiche erzielt. Zudem sind auch Speichen mit leicht unterschiedlichem Querschnitt (z.B. "Dickend-Speichen") gut fixierbar, ohne speziell geformte Spannflächen 3A, 3B vorsehen zu müssen. In der gezeigten Ausführungsform ist jede Spannbacke 2A, 2B jeweils zweiteilig aufgebaut; ein Körper aus formstabilen Material (z.B. Stahl) wird von einer gummielastischen Auflage in Richtung des Spaltes 4 begrenzt.

Nach einer nicht dargestellten Ausführungsform umfasst das Spannmittel eine andere Anzahl von Spannbacken. Beispielsweise kann das Spannmittel als einstückige Zange ausgebildet sein, oder als Schlinge, welche um die Speiche geschlungen und anschließend festgezogen wird. Auch unterbrochene Spannbacken, oder solche, die nach Art eines Bohrfutters von drei oder vier Seiten die Speiche fixieren, sind möglich, sofern die Speiche ohne ein Lösen vom Speichennippel in den Klemmspalt gebracht werden kann.

Nach einer Ausführungsform sind beide Spannbacken 2A, 2B derart linear bewegbar gelagert, dass sie mit ihren Spannflächen 3A, 3B parallel aufeinander zu und voneinander weg bewegbar sind. Hierzu können sie, wie ebenfalls aus der Fig. 1 und der Fig. 2 ersichtlich, beispielsweise eine in Längsrichtung L des Klemmspaltes 4 wirkende Verzahnung aufweisen, mittels welcher sie jeweils mit einem zur synchron-entgegengesetzten Bewegbarkeit beider Spannbacken 2A, 2B eingerichteten Getriebe 5 zusammenwirken. Eine derartige Konstruktion bewirkt einen die Lager schonenden Bewegungsablauf (Lager nicht dargestellt). Dem Getriebe 5 kommt demnach die Aufgabe zu, eine von einer anderen Komponente bereitgestellte Bewegung auf die Spannbacken 2A, 2B zu übertragen. Es ist klar, dass im Falle einer anderen, nicht gezeigten Ausführungsform die Spannbacken nicht zwingend linear bewegbar gelagert sein müssen, beispielsweise im Falle einer Zangenbewegung (s.o.).

Eine andere Ausführung der Erfindung ist in den **Fig. 7 bis 9** gezeigt. Nach dieser Ausführung sind beide Spannbacken 2A, 2B derart um eine gemeinsame Drehachse D bewegbar gelagert, dass sie mit ihren Spannflächen 3A, 3B in einem Winkel aufeinander zu und voneinander weg bewegbar sind, und mit einem zur synchron-entgegengesetzten Bewegbarkeit beider Spannbacken 2A, 2B eingerichteten Getriebe (nur ein Zahnrad ohne Bezugszeichen dargestellt) zusammenwirken (vgl. **Fig. 7**).

Anders ausgedrückt, die beiden Spannbacken führen eine Zangenbewegung aus, indem beide Spannbacken im Bereich ihres jeweils ersten Endes auf einer gemeinsamen Drehachse D drehbar gelagert sind, so dass sich ihre jeweils zweiten Enden aufeinander zu- oder voneinander weg bewegen. Die beiden zweiten Enden stehen demnach in einem Winkel zueinander, wobei dieser Winkel auch Null sein kann. Besonders bevorzugt wird er zu Null, wenn im Klemmspalt 4 eine Speiche (nicht gezeigt) eingespannt ist.

Der Vorteil dieser Ausführung liegt vor allem darin begründet, dass sie deutlich schmäler baut. Dies ist insbesondere dann wünschenswert, wenn nah beieinander liegende Speichen gespannt werden müssen (z.B. bei Kinderfahrrädern).

Nach einer weiteren Ausführungsform werden die Spannbacken direkt angetrieben; ein Getriebe ist in diesem Fall überflüssig. Auch ein fluidischer Antrieb (hydraulisch, pneumatisch) benötigt kein Getriebe der gezeigten Art.

Nach den in allen Figuren gezeigten Ausführungsformen umfasst das Getriebe 5 eine Exzenterwelle 6 mit einer Mehrzahl von alternierend-exzentrisch zum Kern (und somit zur Rotationsachse R) der Exzenterwelle 6 angeordneten Ausrückprofilen 8. Der "Kern" 7 ist ein (gedachter) zylinderförmiger Grundkörper der Exzenterwelle 6, aus welchem die Ausrückprofile 8 als teilumlaufende Erhebungen herausragen. Er hat demnach einen Durchmesser 7', der durch die niedrigsten Abschnitte (Beginn und Ende) der Ausrückprofile 8 vorgegeben ist.

Die Ausrückprofile 8 wirken nach der sowohl in Fig. 1 bis 3 als auch Fig. 7 bis 9 gezeigten Ausführung ihrerseits mit den Aufnehmerflächen 10A, 10B zweier beidseitig der Exzenterwelle 6 angeordneter Aufnehmer 10 zusammen, wobei gemäß der Ausführung der Fig. 1 bis 3 letztere mechanisch derartig mit den Spannbacken 2A, 2B gekoppelt sind, dass die Bewegungen der Ausrückprofile 8 in synchron gegenläufigen (also der Bewegung der Aufnehmer 10 gerade entgegengesetzten, z.B. antiparallelen) Bewegungen der Spannbacken 2A, 2B resultieren (in Fig. 1 Ausrückflächen ohne Bezugszeichen, in Fig. 2 alle Ausrückflächen 10B, jedoch nur eine Ausrückfläche 10A mit Bezugszeichen). Dies kann, wie aus dem Beispiel der Fig. 1 bis 3 ersichtlich, erreicht werden, indem die Aufnehmer 10 jeweils eine parallel zur Längsrichtung L des Klemmspaltes 4 verlaufende Verzahnung aufweisen, welche mit jeweils einem Stirnrad 11 zusammenwirkt, mit dem die Bewegung der Aufnehmer 10 auf die Spannbacken 2A, 2B übertragbar ist.

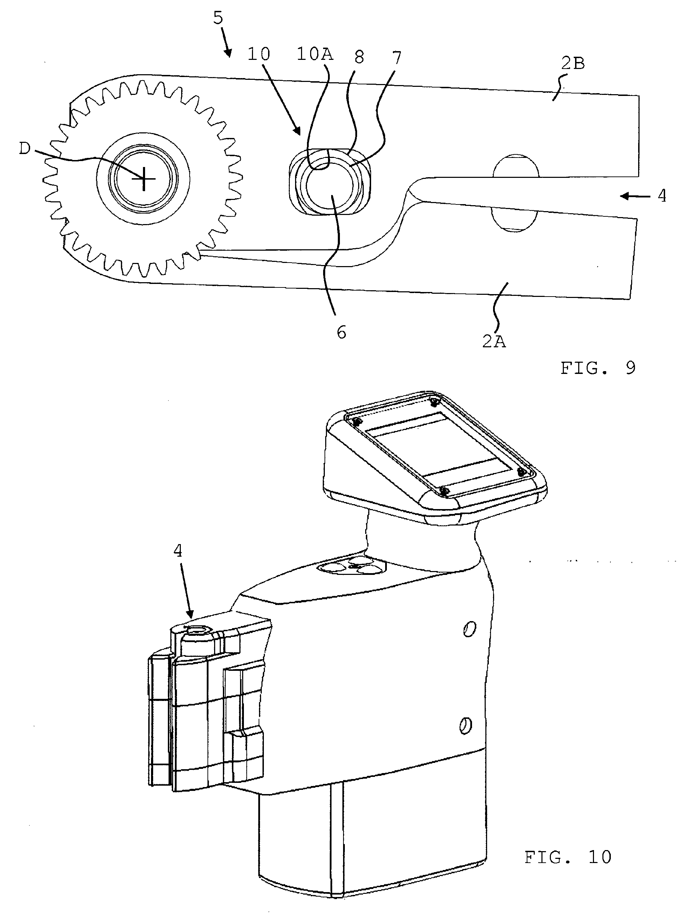

Nach der Ausführung gem. Fig. 7 bis 9 ist der Aufnehmer 10 Teil der Spannbacke 2A bzw. 2B (vgl. insbesondere **Fig. 9**). Die Exzenterwelle 6 wird durch eine Bohrung der Spannbacke 2A bzw. 2B geführt, deren Wandungen abschnittsweise Aufnehmerflächen 10A, 10B bilden, die mit den Ausrückprofilen 8 in Kontakt kommen. Die Bohrungen der beiden Spannbacken 2A, 2B fluchten miteinander, und die Exzenterwelle 6 ragt beidseitig aus dieser Bohrung hinaus (vgl. **Fig. 8**), so dass sie an ihren Enden gelagert werden kann (Lager nicht gezeigt).

Wie insbesondere aus der Fig. 2 ersichtlich, tragen die zur Exzenterwelle 6 weisenden Seiten der Aufnehmer 10 Stufen. Die "Spitzen" der Stufen stehen mit jedem zweiten der Ausrückprofile 8 der Exzenterwelle 6 in Kontakt; dies sind die eigentlichen Aufnehmerflächen 10B. Die "Gründe" der Stufen sind hingegen so tief bemessen, dass gerade kein Kontakt mit einem auf derselben Höhe der Rotationsachse R liegenden Ausrückprofil 8 zustande kommt, da dieses ja zum Kontaktieren des gerade gegenüber liegenden Aufnehmers vorgesehen ist. Der besondere Vorteil dieser Konstruktion liegt in der gleichmäßigen Belastung der Exzenterwelle 6 und der von ihr kontaktierten Aufnehmern 10.

Nach einer allgemeiner formulierten Ausführungsform sind die Aufnehmer 10 über tangential kraftschlüssige Rotationskörper (z.B. Stirnräder 11) mit den Spannbacken 2A, 2B entgegengesetzt zu deren Bewegungsrichtung verbunden.

Nach einer nicht gezeigten Ausführungsform erfolgt die Übertragung der Bewegung der Aufnehmer auf die Spannbacken mittels einer Wipphebel-Konstruktion. Aufnehmer und/oder Spannbacken können wahlweise mittels Kraftschluss (durch bloßes Übertragen von Druckkräften von den Aufnehmern auf die Wipphebel bzw. von den Wipphebeln auf die Spannbacken) erfolgen, oder es kann ein Formschluss realisiert sein (z.B. mittels Bolzen als Drehgelenken an den Verbindungsstellen zwischen Aufnehmern und Wipphebeln bzw. Wipphebeln auf die Spannbacken).

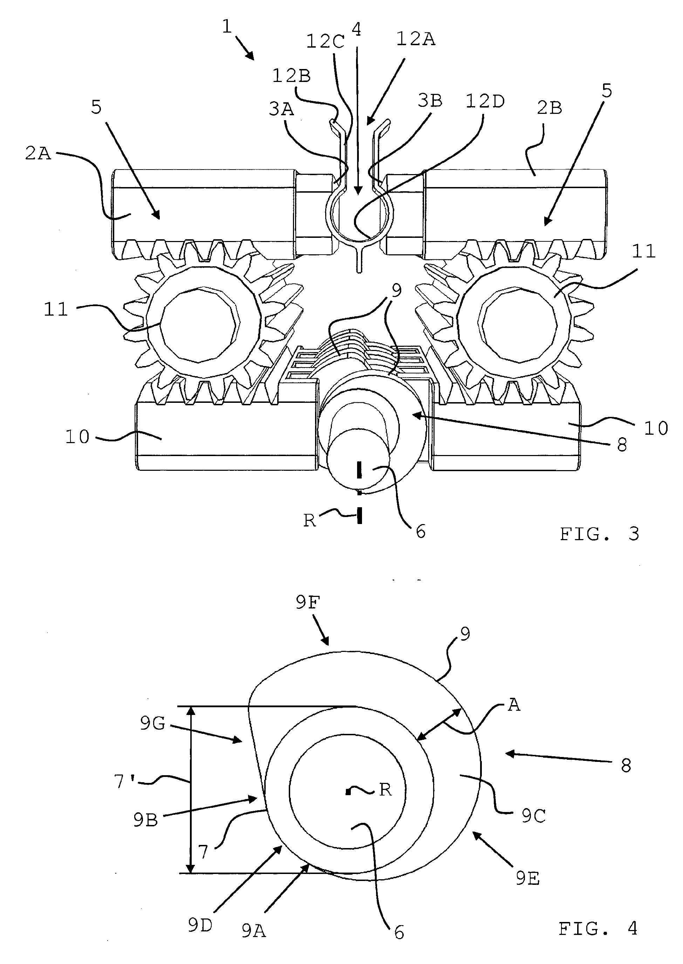

Wie in **Fig. 3**, die eine Draufsicht auf eine Ausführungsform der Vorrichtung zeigt, dargestellt, weisen nach einer bevorzugten Ausführungsform der Ausrückprofile 8 dieselben entlang des Umfangs des Kerns 7 jeweils eine zur Rotationsachse R des Kerns 7 exzentrische Ausrückfläche 9 auf. Die Ausrückflächen 9 sind dazu vorgesehen, mit den Aufnehmerflächen der Aufnehmer (nicht gezeigt) zusammenzuwirken. Auch die Exzenterwelle 6 der anderen Ausführungsform der Vorrichtung weist diese Merkmale auf, wobei aus Gründen der Übersichtlichkeit nicht alle Bezugszeichen vorhanden sind.

Nach einer besonders bevorzugten Ausführungsform nehmen die Aufnehmerflächen 10A, 10B abschnittsweise eine koplanare Position mit den (dann zu ihnen tangentialen) Ausrückflächen 9 der Ausrückprofile 8 ein. "Abschnittsweise" bedeutet, dass diese tangentiale Position nicht in jeder Rotationsposition der Exzenterwelle gegeben sein muss.

Die **Fig. 4** zeigt eine Draufsicht auf die vergrößert dargestellte Exzenterwelle alleine. Vorzugsweise verlaufen Beginn 9A und Ende 9B einer Ausrückfläche 9 tangential zum Kern 7 der Exzenterwelle 6, und der radiale Abstand A der Ausrückfläche 9 zum Kern 7 weist entlang des Umfangs der Exzenterwelle 6 im Bereich zwischen Beginn 9A und Ende 9B einen Bereich 9C mit größerem Abstand A auf. Dieser Übergangsbereich 9C dient dazu, im Wege des Drehens der Exzenterwelle 6 den auf den jeweiligen Aufnehmer (nicht dargestellt) "wirksamen" Exzenterwellendurchmesser sukzessive zu vergrößern und so den Aufnehmer 10 fortlaufend auszurücken, und umgekehrt.

Besonders bevorzugt wird dies erreicht, indem vor dem Beginn 9A ein erster konstanter Abschnitt 9D vorhanden ist, in welchem die Ausrückfläche 9 tangential an der Aufnehmerfläche (nicht dargestellt, vgl. Fig. 3) anliegen kann. Anschließend steigt der Abstand A sukzessive an (Mittelabschnitt 9E). In einem zweiten konstanten Abschnitt 9F bleibt der Abstand A wieder auf unverändertem Niveau, so dass die Ausrückfläche 9 wieder tangential an der Aufnehmerfläche anliegen kann (vgl. Fig. 3). Schließlich fällt die Ausrückfläche 9 in einem Endabschnitt 9G wieder auf den Kern 7 ab. Die Ausrückfläche 9 überstreicht vom Beginn 9A bis zum Ende 9B einen Zentriwinkel von z.B. nicht mehr als 330 Grad (das mögliche Maximum liegt bei 360 Grad). Die übrigen z.B. 30 Grad bilden den ersten konstanten Abschnitt 9D.

Anders ausgedrückt, das Ausrückprofil 8 weist entlang des Umfangs zwei Stufen auf, wobei die erste Stufe auf dem Umfang des Kerns 7 liegt, und die zweite Stufe von diesem beabstandet ist, so dass im Bereich beider Stufen ein tangentiales Anliegen des Ausrückprofils 8 mit der Aufnehmerfläche 10A, 10B ermöglicht ist, und wobei zwischen der ersten und der zweiten Stufe ein nichtsprunghafter Übergangsbereich 9C angeordnet ist.

Durch eine solche Konstruktion wird erreicht, dass in den Bereichen gleichbleibenden Abstands A (erster und zweiter konstanter Abschnitt 9D bzw. 9F) eine Selbsthemmung der Ausrückbewegung erfolgt, insbesondere im Spannmaximum.

Wie außerdem in der **Fig. 1 bis Fig. 3** gezeigt, kann die Vorrichtung ferner eine Einführhilfe 12 für die Speiche (nicht dargestellt) umfassen. Diese kann in proximaler und/oder distaler Verlängerung des Klemmspalts 4 angeordnet sein, d.h. sie befindet sich näher an einer Nabe (wie in den Fig. 1 bis 3 gezeigt, sofern davon auszugehen ist, dass in der Fig. 1 ein Speichennippel unterhalb der Vorrichtung angeordnet ist) oder näher an einem Speichennippel (Nabe und Speichennippel jeweils nicht dargestellt).

Die Speiche wird mittels der nach außen gerichteten, federnd beweglichen Aufnahmeflächen 12B der Einführöffnung 12A und der kleiner als der Speichendurchmesser beabstandeten, ebenso federnd beweglichen Spaltflächen 12C (jeweils nur einmal mit Bezugszeichen versehen) des Einführspalts (ohne Bezugszeichen) in die Justierhalterung 12, welche durch eine axial mittig zu den Spannflächen 3A, 3B verlaufende Radialfläche 12D begrenzt ist, hineinbewegt. Somit ist die Speichenachse klammerartig mittig zu den Spannflächen 3A, 3B für den Klemmvorgang positionierbar, wobei die Einführöffnung 12A der Justierhalterung 12 auch anderweitig, z.B. mittels eines spitz zulaufenden Spaltes, ausgestaltet sein kann.

Auf diese Weise kann eine Speiche, welche durch die Einführöffnung 12A in die Justierhalterung 12 gelangt, durch einfaches Anlegen an der Radialfläche 12D relativ zu den Spannflächen 3A, 3B in die zum Fixieren passende Position gebracht werden, bzw. die Vorrichtung wird ihrerseits relativ zur Speiche so positioniert, dass die Speiche die beschriebene Lage einnehmen kann.

Es ist klar, dass auch die andere Ausführung der erfindungsgemäßen Vorrichtung eine solche Einführhilfe aufweisen kann.

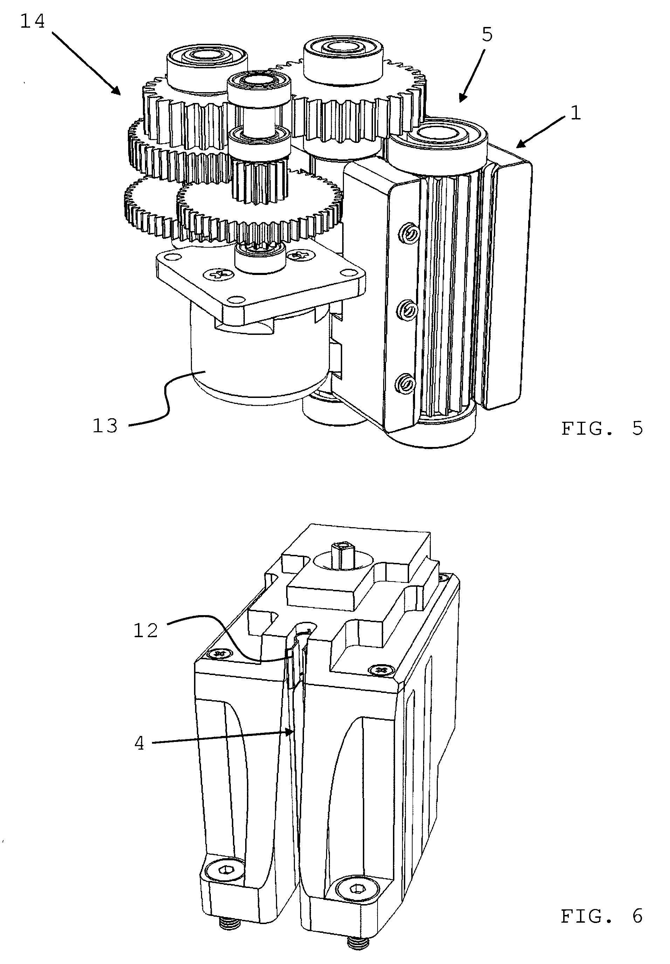

In **Fig. 5** ist die in den vorhergehenden Figuren gezeigte Ausführungsform mit weiteren Komponenten (Zahnräder einer Übersetzung, Lager) dargestellt; bereits eingeführte Bezugszeichen sind teilweise weggelassen). Demnach umfasst die Vorrichtung auch einen Antrieb 13, welcher direkt oder, wie gezeigt, indirekt (mittels der Übersetzung 14 und dem Getriebe 5) mit dem Spannmittel 1 zusammenwirkt. Der Antrieb 13 ist vorzugsweise ein Elektromotor, kann jedoch auch eine hydraulische oder pneumatische Pumpe sein.

In der Fig. 5 sind auch Federn erkennbar, welche dem Andrücken der Aufnehmer gegen die Exzenterwelle dienen, um jederzeit einen optimalen Kontakt zu gewährleisten.

Alternativ ist ein derartiger Antrieb mittels einer geeigneten Schnittstelle (nicht gezeigt) an die Vorrichtung ankoppelbar; so kann die Vorrichtung einen ohnehin vorhandenen Antrieb einer anderen Komponente mitnutzen, welche Teil einer zum Zentrieren oder Spannungs-Optimieren vorgesehenen Einrichtung (z.B. automatische Zentriereinrichtung) ist.

In der **Fig. 6** ist die erste Ausführung der Vorrichtung schräg von vorn mit einem sie umgebenden Gehäuse dargestellt. Im Vordergrund ist eine Öffnung sichtbar, in welcher sich der Klemmspalt 4 und die Einführhilfe 12 befinden.

In der **Fig. 10** ist die zweite Ausführung der Vorrichtung mit einem Gehäuse dargestellt. Vorne links im Bild befindet sich der Klemmspalt 4. Oben sind eine Anzeige sowie Bedienelemente vorhanden, und im unteren Teil sind Batterien (nicht sichtbar) untergebracht.

Die Erfindung betrifft auch eine Einrichtung zum automatisierten Einspeichen und/oder Zentrieren von Laufrädern, und/oder zur Justage der Spannung deren Speichen, umfassend die vorstehend beschriebene Vorrichtung zum Fixieren der Speiche. Mit anderen Worten, die Erfindung erstreckt sich nicht nur auf die Vorrichtung zum Fixieren als solche, sondern auch auf Einrichtungen, die generell dem automatisierten Spannen von Speichen dienen, und welche die erfindungsgemäße Vorrichtung umfassen. Dies können beispielsweise Anlagen zum Einspeichen oder Zentrieren von Laufrädern sein, oder Anlagen, mit denen die Speichenspannung optimiert (angeglichen) wird, um ein höherqualitatives Laufrad zu erhalten. Der Begriff "automatisiert" deutet an, dass - bis auf ein Einbringen des Laufrads in die Einrichtung - im Wesentlichen keine manuellen Eingriffe eines Benutzers mehr nötig sind. Eine solche Einrichtung umfasst typischerweise einen Antrieb zum Drehen des Laufrads, eine Messvorrichtung zur Messung der Speichenspannung, einen automatisierten Nippelschraubmechanismus, sowie die erfindungsgemäße Vorrichtung zum Fixieren der Speiche. Die Komponenten sind in einem Rahmen oder dergleichen angeordnet, in welchen das Laufrad eingespannt und anschließend automatisiert bearbeitet wird.

Anders ausgedrückt, die erfindungsgemäße Vorrichtung eignet sich gut zur Ergänzung von herkömmlichen Einrichtungen der beschriebenen Art, beispielsweise einer Einrichtung gemäß der eingangs erwähnten Druckschrift WO 2006 114 087 A2.

Nach einer anderen Ausführungsformen betrifft die Erfindung auch eine Einrichtung zum halbautomatischen Justieren der Spannung der Speichen von Laufrädern. Der Begriff "halbautomatisch" deutet an, dass auch manuelles Eingreifen eines Benutzers erforderlich ist. Eine solche Einrichtung umfasst die vorstehend beschriebene Vorrichtung zum Fixieren der Speiche, sowie eine Messvorrichtung zur Messung der Speichenspannung und einen automatisierten Nippelschraubmechanismus. Ein Rahmen, in welchen das Laufrad eingespannt wird, oder ein Antrieb zum Drehen des Laufrads ist typischerweise nicht vorhanden. Die Einrichtung wird vorzugsweise mit der Hand gehalten und manuell auf den Nippel der zu justierenden Speiche gesetzt. Erst die anschließenden Schritte des Messens, des Berechnens der notwendigen Umdrehungen des Speichennippels, sowie das Durchführen der entsprechenden Schraubbewegungen (mit vorhergehender Fixierung der Speiche) werden automatisiert durchgeführt.

Die Erfindung betrifft außerdem ein Verfahren zum Justieren der Spannung von Speichen von Laufrädern, wobei zum Justieren der Spannung ein automatisiertes Drehen eines Speichennippels erfolgt, und wobei ferner vor dem automatisierten Drehen ein Fixieren der mit dem Speichennippel verbundenen Speiche dergestalt erfolgt, dass die Speiche in Rotationsrichtung um ihre Längsachse zumindest abschnittsweise festgelegt ist, demnach nicht mehr rotieren kann. Mittels eines solchen Verfahrens wird sichergestellt, dass der Aufwand zum Bestimmen der Umdrehungen, welche zum Erreichen einer vorgegebenen Speichenspannung nötig sind, minimiert wird, da keine Ausgleichsbewegungen vor dem Bestimmen der Speichenspannung nötig sind, und keine zeitintensiven Berechnungen benötigt werden, da eine einfache automatische Spannungsberechnung lediglich die Parameter der Gewindereibung und des Drehmoments berücksichtigen muss, wie aus der o.g. Druckschrift WO 2006 114 087 A2 bekannt.

Erfindungsgemäß ist während (und trotz) des Fixierens eine Bewegung der Speiche in Richtung ihrer Längsachse möglich. Bei Spannen der Speiche bewegt sich ihr distales Ende in den Nippel hinein bzw. aus diesem heraus. Somit wird die Speiche durch das Spannen entweder gedehnt oder entspannt und somit verkürzt; je näher ein Punkt der Speiche am Nippel liegt, desto stärker ist seine Längsbewegung. Auch die Fixierung greift vorzugsweise möglichst nahe des distalen Endes der Speiche (und somit beim Nippel) an, welches sich beim Spannen gerade am stärksten in Längsrichtung der Speiche bewegt. Würde die Speiche durch die Fixierung nicht nur rotatorisch, sondern auch längsaxial festgelegt sein, würde das kurze Endstück zwischen fixiertem Bereich und eingeschraubtem Ende sehr stark gedehnt bzw. entspannt werden, wohingegen der (typischerweise deutlich längere) Abschnitt zwischen Fixierung und proximalem (der Nabe zugewandtem) Ende diesen Längenausgleich nicht oder nur wenig mit vollführt. Ist jedoch der fixierte Abschnitt in längsaxialer Richtung bewegbar, eine Bewegung der Speiche in Richtung ihrer Längsachse also ermöglicht, wird die gesamte Speiche entsprechend der Änderung ihrer Spannung verlängert oder verkürzt, was vorteilhaft ist; auf die obenstehenden Erläuterungen wird verwiesen.

Das erfindungsgemäße Verfahren ist bei allen Arbeiten an Laufrädern vorteilhaft verwendbar, bei denen eine Korrektur der Spannung zumindest einer Speiche nötig ist.

Demnach kann das erfindungsgemäße Verfahren beispielsweise im Rahmen des Zentrierens von Laufrädern durchgeführt werden, indem vor dem erfindungsgemäßen Fixieren der Speiche zunächst eine Messung des Seiten-und/oder Höhenschlages des Laufrads zumindest an der Position des Speichennippels durchgeführt wird. Außerdem erfolgt vor oder während dem erfindungsgemäßen Fixieren, jedoch vor dem automatisierten Drehen (= Justieren der Speichenspannung), zunächst eine Bestimmung der zum Verringern des Seiten- bzw. Höhenschlages notwendigen Umdrehungen des Speichennippels (Berechnung). Während des Fixierens (also noch während der Fixierung der Speiche) erfolgt dann das automatisierte Drehen gemäß der zuvor durchgeführten Bestimmung. Mit anderen Worten, zwischen den bekannten Schritten des Messens der Felgenauslenkung und des Drehens des Speichennippels wird die Speiche fixiert, so dass sie während des nachfolgenden Drehens des Speichennippels nicht rotieren kann.

Es ist klar, dass nach dem Justieren der Spannung einer Speiche die benachbarte Speiche mit dem erfindungsgemäßen Verfahren justiert wird; hierzu kann die Einrichtung einen entsprechenden Anrieb für das Laufrad aufweisen. Ein Laufrad kann mit einem oder mehreren Durchgängen zentriert werden; es kann auch nur ein vorbestimmter Bereich bearbeitet werden, oder die Einrichtung sucht sich selbsttätig einen Bereich aus, dessen Seiten- oder Höhenschlag nicht innerhalb einer vorgegebenen Abweichung liegt.

Besonders bevorzugt erfolgt das Messen der Spannung der Speiche mittels der Messung des zum Drehen des ihr zugeordneten Speichennippels benötigten Drehmoments, z.B. über den von einem Antrieb benötigten Strom.

Vorzugsweise erfolgt vor dem eigentlichen Drehen zur Justage ein kurzes "gängig machen" des Nippels, indem derselbe ein Stück, beispielsweise eine halbe Umdrehung, in eine oder beide Richtungen gedreht wird. Ist die Speiche noch nicht fixiert, erfolgt zumindest ein Losbrechen des ggf. festkorrodierten Nippels von der Felge. Ist die Speiche fixiert, erfolgt zusätzlich ein Losbrechen einer ggf. festkorrodierten Verbindung zwischen Nippel und Speiche.

Durch das "gängig machen" der Schraubverbindung wird auch vorhandene Torsion beseitigt, um eine verlässliche Startposition des Nippels für eine Messung der Speichenspannung zu erhalten. Dazu kann z.B. mit einer Standarddrehung von 60° - 120° die Speiche zuerst entspannt, dann fixiert, und wieder standardmäßig um 60° - 120° gespannt werden. Anschließend erfolgt die Messung der tatsächlichen und Bestimmung der gewünschten Speichenspannung, danach wird die gewünschte Speichenspannung angefahren.

Auch kann das erfindungsgemäße Verfahren im Rahmen des halb-manuellen oder automatischen Spannungs-Optimierens eines Laufrads durchgeführt werden. Hierzu erfolgt zunächst eine Messung der tatsächlichen Spannung dieser Speiche. Diese Messung kann mittels aus dem Stand der Technik bekannter Verfahren (z.B. Klanganalyse), wie auch durch die weiter oben beschriebene Motorstrom-Methode durchgeführt werden, wobei ggf. auch ein erfindungsgemäßes (Vorab-)Fixieren der Speiche sinnvoll sein kann. Nach dem Messen, jedoch vor dem Drehen wird dann eine Bestimmung (Berechnung) der zum Erreichen einer vorgegebenen Spannung notwendigen Umdrehungen des mit der Speiche verbundenen Speichennippels durchgeführt. Während dem Drehen dieses Speichennippels zur Justage der Speichenspannung wird die Speichen dann erfindungsgemäß fixiert.

Ein solches Verfahren ist sowohl in einer vollautomatischen als auch einer halb-manuellen Variante möglich. In der halb-manuellen Variante wird eine Einrichtung, welche eine Messvorrichtung, die erfindungsgemäße Vorrichtung zum Fixieren, sowie eine Vorrichtung zum automatisierten Drehen umfasst, in der Hand gehalten und zunächst so platziert, dass die Speiche im Klemmspalt und die Einrichtung zum automatisierten Drehen auf dem zugehörigen Speichennippel positioniert ist. Ein Haltegestell oder dergleichen ist nicht notwendig. Alsdann führt die Einrichtung automatisiert die erfindungsgemäßen Schritte aus. Sie wird dann manuell an der nächsten Speiche platziert, bis alle Speichen eines Laufrades justiert worden sind.

Bei der vollautomatischen Variante ist die Einrichtung an einem Gestell befestigt, und das Laufrad wird mittels eines Antriebs in die verschiedenen Positionen gedreht. Die Einrichtung kann sich außerdem automatisiert auf die Speiche zu und wieder von ihr weg bewegen. Das Wechseln der einzelnen Speichen bzw. Nippel erfolgt somit ebenfalls automatisch.

Es ist klar, dass auch hier die Messung der Speichenspannung und das gängig machen wie weiter oben beschrieben durchgeführt werden kann.

Besonders bevorzugt wird zum Fixieren der Speiche eine erfindungsgemäße Vorrichtung gemäß obenstehender Beschreibung verwendet. Das Verfahren ist jedoch auch mit anders konstruierten Vorrichtungen, welche zum Fixieren von Speichen geeignet und im Rahmen einer entsprechenden Einrichtung verbaut sind, in gleicher Weise verwendbar.

Wie ausführlich dargelegt löst die Erfindung die ihr gestellten Aufgaben. Mit ihrer Hilfe wird das Arbeitsergebnis weiter verbessert, und der Zeitverlust und der Rechenaufwand im Hinblick auf die weiter oben beschriebenen Arbeitsschritte der Ausgleichsbewegung signifikant verringert werden.

### Bezugszeichenliste

- 1: Spannmittel
- 2A,2B: Spannbacke
- 3A,3B: Spannfläche
- 4: Klemmspalt
- 5: Getriebe
- 6: Exzenterwelle
- 7: Kern
- 7': Durchmesser
- 8: Ausrückprofil
- 9: Ausrückfläche
- 9A: Beginn
- 9B: Ende
- 9C: Bereich (mit größerem Abstand), Übergangsbereich
- 9D: erster konstanter Abschnitt
- 9D: Anfangsabschnitt
- 9E: Mittelabschnitt
- 9F: zweiter konstanter Abschnitt
- 9G: Endabschnitt
- 10: Aufnehmer
- 10A,10B: Aufnehmerfläche
- 11: Stirnrad
- 12: Justierhalterung
- 12A: Einführöffnung
- 12B: Aufnahmefläche
- 12C: Spaltfläche
- 12D: Radialfläche
- 13: Antrieb
- 14: Übersetzung
- 15: Aufnahme
- 16: Wälzlager
- L: Längsachse
- R: Rotationsachse
- A: Abstand

## Patentansprüche

1. Vorrichtung zum Fixieren der Speiche eines Laufrades im Rahmen des Spannens derselben, umfassend ein Spannmittel (1) mit einem breitenvariablen Klemmspalt (4) mit einer Längsachse (L), in welchem ein Abschnitt der Speiche aufnehmbar ist, wobei im Wege des Antreibens des Spannmittels (1) der Klemmspalt (4) so weit verkleinerbar ist, dass der Abschnitt der Speiche vom Spannmittel (1) kraft- und/oder formschlüssig fixierbar ist, wobei die Vorrichtung ferner Spannflächen (3A, 3B) aufweist, **dadurch gekennzeichnet, dass** die Spannflächen (3A, 3B) in Richtung der Längsachse (L) des Klemmspalts (4) verschiebbar sind, so dass der Abschnitt rotatorisch festgelegt und in längsaxialer Richtung bewegbar ist, wodurch eine Bewegung der Speiche in Richtung ihrer Längsachse ermöglicht ist.

2. Vorrichtung nach Anspruch 1, wobei das Spannmittel (1) zwei Spannbacken (2A, 2B) umfasst, welche jeweils eine Spannfläche (3A, 3B) aufweisen, wobei die Spannbacken (2A, 2B) mit ihren Spannflächen (3A, 3B) derart beabstandet zueinander angeordnet sind, dass sich der Klemmspalt (4) ergibt.

3. Vorrichtung nach Anspruch 2, wobei beide Spannbacken (2A, 2B) derart linear bewegbar gelagert sind, dass sie mit ihren Spannflächen (3A, 3B) parallel aufeinander zu und voneinander weg bewegbar sind, und mit einem zur synchronentgegengesetzten Bewegbarkeit beider Spannbacken (2A, 2B) eingerichteten Getriebe (5) zusammenwirken.

4. Vorrichtung nach Anspruch 2, wobei beide Spannbacken (2A, 2B) derart um eine gemeinsame Drehachse bewegbar gelagert sind, dass sie mit ihren Spannflächen (3A, 3B) in einem Winkel aufeinander zu und voneinander weg bewegbar sind, und mit einem zur synchron-entgegengesetzten Bewegbarkeit beider Spannbacken (2A, 2B) eingerichteten Getriebe (5) zusammenwirken.

5. Vorrichtung nach Anspruch 3 oder 4, wobei das Getriebe (5) eine Exzenterwelle (6) mit einer Mehrzahl von alternierendexzentrisch zum Kern (7) der Exzenterwelle (6) angeordneten Ausrückprofilen (8) umfasst, welche ihrerseits mit den Aufnehmerflächen (10A, 10B) zweier beidseitig der Exzenterwelle (6) angeordneter Aufnehmer (10) zusammenwirken, wobei letztere mechanisch derartig mit den Spannbacken (2A, 2B) gekoppelt sind, dass ihre Bewegungen in synchron gegenläufigen Bewegungen der Spannbacken (2A, 2B) resultieren.

6. Vorrichtung nach Anspruch 5, wobei die Ausrückprofile (8) entlang des Umfangs des Kerns (7) jeweils eine zur Rotationsachse (R) des Kerns (7) exzentrische Ausrückflächen (9) aufweisen.

7. Vorrichtung nach einem der vorhergehenden Ansprüche, wobei dieselbe einen Antrieb (13) umfasst, welcher direkt oder indirekt mit dem Spannmittel (1) zusammenwirkt.

8. Einrichtung zum automatisierten Einspeichen und/oder Zentrieren von Laufräder und/oder zur Justage der Spannung deren Speichen, umfassend eine Vorrichtung zum Fixieren der Speiche nach einem der Ansprüche 1 bis 7.

9. Einrichtung zum halbautomatischen Justieren der Spannung der Speichen von Laufrädern, umfassend eine Vorrichtung zum Fixieren der Speiche nach einem der Ansprüche 1 bis 7, sowie eine Messvorrichtung zur Messung der Speichenspannung und einen automatisierten Nippelschraubmechanismus.

10. Verfahren zum Justieren der Spannung von Speichen von Laufrädern, wobei zum Justieren der Spannung ein automatisiertes Drehen eines Speichennippels erfolgt, und wobei vor dem automatisierten Drehen ein Fixieren der mit dem Speichennippel verbundenen Speiche dergestalt erfolgt, dass die Speiche in Rotationsrichtung um ihre Längsachse zumindest abschnittsweise festgelegt ist, **dadurch gekennzeichnet, dass** während des Fixierens eine Bewegung der Speiche in Richtung ihrer Längsachse ermöglicht ist.

11. Verfahren nach Anspruch 10, wobei dasselbe im Rahmen des Zentrierens von Laufrädern durchgeführt wird, indem vor dem Fixieren der Speiche eine Messung des Seiten- und/oder Höhenschlages des Laufrads zumindest an der Position des Speichennippels, sowie vor oder während dem Fixieren, jedoch vor dem automatisierten Drehen, eine Bestimmung der zum Verringern des Seiten- bzw. Höhenschlages notwendigen Umdrehungen des Speichennippels erfolgt, und während dem Fixieren das automatisierte Drehen gemäß der zuvor durchgeführten Bestimmung erfolgt.

12. Verfahren nach Anspruch 10, wobei dasselbe im Rahmen des Spannungs-Optimierens des Laufrads durchgeführt wird, indem zunächst eine Messung der tatsächlichen Spannung dieser Speiche durchgeführt wird, vor oder während dem Fixieren, jedoch vor dem automatisierten Drehen, ein Bestimmen der zum Erreichen einer vorgegebenen Spannung notwendigen Umdrehungen eines mit der Speiche verbundenen Speichennippels erfolgt, und während dem Fixieren das automatisierte Drehen dieses Speichennippels durchgeführt wird.

13. Verfahren nach einem der Ansprüche 10 bis 12, wobei zum Fixieren der Speiche eine Vorrichtung gemäß einem der Ansprüche 1 bis 7 verwendet wird.

## Claims

1. Device for fixing a spoke of a wheel in the context of trueing the same, comprising a clamping means (1) with a clamping gap (4) of variable width with a longitudinal axis (L), in which a section of the spoke can be received, wherein, by driving the clamping means (1), the clamping gap (4) can be narrowed so far that the section of the spoke can be fixed form-locking and/or force-fitting by the clamping means (1), wherein the device further comprises surfaces (3A, 3B) **characterized in that** the surfaces (3A, 3B) are moveable in direction of the longitudinal axis (L) of the clamping gap (4), so that said section is rotationally fixed and moveable in longitudinal direction, such that a movement of the spoke in direction of its longitudinal axis is enabled.

2. The device according to claim 1, wherein the clamping means (1) comprises two clamping jaws (2A, 2B) which respectively have a clamping surface (3A, 3B), wherein the clamping jaws (2A, 2B) are spaced apart with their clamping surfaces (3A, 3B) forming the clamping gap (4).

3. The device according to claim 2, wherein both clamping jaws (2A, 2B) are linearly moveable and supported in such a manner that they can be moved in parallel towards, and away from, each other with their clamping surfaces (3A, 3B), and cooperate with a gearing (5) that is configured for the synchronous-opposite movability of both clamping jaws (2A, 2B).

4. The device according to claim 2, wherein both clamping jaws (2A, 2B) are movably supported around a common rotation axis such that they are moveable at an angle towards, and away from, each other with their clamping surfaces (3A, 3B), and cooperate with a gearing (5) which is configured for the synchronous-opposed movability of both clamping jaws (2A, 2B).

5. The device according to claim 3 or 4, wherein the gearing (5) comprises an eccentric shaft (6) with a multitude of disengagement profiles (8) being alternating-eccentrically arranged to a core (7) of the eccentric shaft (6), the disengagement profiles (8) cooperating with the transducer surfaces (10A, 10B) of two transducers (10) which are bilaterally arranged with respect to the eccentric shaft (6), wherein the transducers (10) are mechanically coupled to the clamping jaws (2A, 2B) such that their movements result in synchronous-contrary movements of the clamping jaws (2A, 2B).

6. The device according to claim 5, wherein along the circumference of the core (7), the respective disengagement profiles (8) have a disengagement surface (9) which lies eccentric to the rotation axis (R) of the core (7).

7. The device according to any one of the preceding claims, further comprising a drive (13), which directly or indirectly cooperates with the clamping means (1).

8. Equipment for the automatic building and/or trueing of wheels and/or for the adjusting of the tension of their spokes, comprising a device for fixing a spoke according to any one of claims 1 to 7.

9. Equipment for the semi-automatic adjusting of the tension of wheel spokes, comprising a device for fixing a spoke according to any one of claims 1 to 7, as well as a device for measuring spoke tension, and an automated nipple screwing mechanism.

10. A method for adjusting tension of wheel spokes, wherein for the adjusting of the tension, an automated turning of a spoke nipple takes place, and wherein prior to the automated turning, fixing of the spoke which is connected to this spoke nipple takes place such that the spoke is fixed in rotation direction around its longitudinal axis at least along a spoke section, **characterized in that** during fixation, a movement of the spoke in direction of its longitudinal axis is enabled.

11. The method according to claim 10, wherein, for trueing of wheels, prior to fixing the spoke, a side and radial runout is measured at least at the position of the spoke nipple, and further wherein prior to or during fixing the spoke, but prior to the automated turning, a number of spoke nipple revolutions necessary for reducing the respective side or radial runout is determined, and in that during the fixing, the automated turning according to the previously carried out determination takes place.

12. Method according to claim 10, wherein for tension-optimization of the wheel, at first, a measurement of the real tension of this spoke is carried out, and wherein prior to or during the fixing, but before the automated turning, a determination of the number of revolutions, being necessary for reaching a predetermined tension, of a spoke nipple which is connected to the spoke is carried out, and wherein during fixing, the automated turning of this spoke nipple is carried out.

13. Method according to any one of claims 10 to 12, wherein for fixing the spoke, a device according to any one of claims 1 to 7 is used.

## Revendications

1. Dispositif destiné à fixer le rayon d'une roue de vélo dans le cadre de sa tension, comprenant un moyen de tension (1) comportant une fente de blocage (4), de largeur variable avec un axe longitudinal (L), laquelle peut recevoir une partie du rayon, la fente de blocage (4) pouvant, au cours de l'entraînement du moyen de tension (1), être rétrécie de telle sorte que la partie du rayon peut être fixée par le moyen de tension (1) par complémentarité de force et/ou de forme, le dispositif présentant en outre des surfaces de tension (3A, 3B), **caractérisé en ce que** les surfaces de tension (3A, 3B) peuvent être déplacées dans la direction de l'axe longitudinal (L) de la fente de blocage (4) de telle sorte que la partie est immobilisée en rotation et est mobile dans la direction de l'axe longitudinal, ce qui permet un mouvement du rayon dans la direction de son axe longitudinal.

2. Dispositif selon la revendication 1, dans lequel le moyen de tension (1) comprend deux mâchoires de tension (2A, 2B) qui présentent chacune une surface de tension (3A, 3B), les mâchoires de tension (2A, 2B) étant avec leurs surfaces de tension (3A, 3B) espacées l'une de l'autre de manière à obtenir la fente de blocage (4).

3. Dispositif selon la revendication 2, dans lequel les deux mâchoires de tension (2A, 2B) sont montées mobiles linéairement de telle sorte qu'elles peuvent se déplacer avec leurs surfaces de tension (3A, 3B) parallèlement l'une par rapport à l'autre vers et depuis l'une et l'autre, et coopèrent avec un engrenage (5) aménagé pour la mobilité en synchronisme en sens opposé des deux mâchoires de tension (2A, 2B).

4. Dispositif selon la revendication 2, dans lequel les deux mâchoires de tension (2A, 2B) sont montées mobile autour d'un axe de rotation commun de telle sorte qu'elles sont mobiles l'une par rapport à l'autre avec leurs surfaces de tension (3A, 3B) selon un angle vers et depuis l'une et l'autre, et coopèrent avec un engrenage (5) aménagé pour la mobilité en synchronisme en sens opposé des deux mâchoires de tension (2A, 2B).

5. Dispositif selon la revendication 3 ou 4, dans lequel l'engrenage (5) comprend un arbre à excentrique (6) comportant une pluralité de profils de sortie (8) disposés de manière excentrique alternativement par rapport au noyau (7) de l'arbre à excentrique (6) et qui coopèrent à leur tour avec les surfaces de logement (10A, 10B) de deux logements (10) disposés des deux côtés de l'arbre à excentrique (6), ces derniers étant couplés mécaniquement aux mâchoires de tension (2A, 2B) de telle sorte que leurs mouvements résultent en des mouvements en synchronisme en sens opposé des mâchoires de tension (2A, 2B).

6. Dispositif selon la revendication 5, dans lequel les profils de sortie (8) présentent chacun, le long de la circonférence du noyau (7), une surface de sortie (9) excentrique par rapport à l'axe de rotation (R) du noyau (7).

7. Dispositif selon une des revendications précédentes, comprenant en outre un entraînement (13) qui coopère directement ou indirectement avec le moyen de tension (1).

8. Équipement destiné à automatiser le rayonnage et/ou centrage de roues et/ou l'ajustage de la tension de ses rayons, comprenant un dispositif de fixation du rayon selon une des revendications 1 à 7.

9. Équipement destiné à ajuster de manière semi-automatique la tension des rayons de roues, comprenant un dispositif de fixation de rayon selon une des revendications 1 à 7, et un moyen de mesure destiné à mesurer la tension du rayon et un mécanisme de vissage d'écrou automatique.

10. Procédé destiné à ajuster la tension des rayons de roues de vélo, dans lequel, pour ajuster la tension, une rotation automatique d'un écrou de rayon est réalisée, et dans lequel, avant la rotation automatique, une fixation du rayon relié à l'écrou de rayon s'effectue de telle sorte que le rayon est immobilisé dans la direction de rotation autour de son axe longitudinal au moins par parties, **caractérisé en ce que**, pendant la fixation, un mouvement du rayon est possible dans la direction de son axe longitudinal.

11. Procédé selon la revendication 10, qui est mis en oeuvre dans le cadre du centrage de roues de vélo, dans lequel, avant la fixation du rayon, une mesure du décentrage latéral et/ou radial de la roue de vélo est effectuée au moins au niveau de la position de l'écrou de rayon, ainsi que, avant ou pendant la fixation, mais avant la rotation automatique, une détermination des tours de l'écrou de rayon nécessaires pour diminuer le décentrage latéral respectivement radial est effectuée et, pendant la fixation, la rotation automatique est effectuée selon la détermination réalisée précédemment.

12. Procédé selon la revendication 10, dans lequel il est mis en oeuvre dans le cadre de l'optimisation de la tension de la roue, dans lequel une mesure de la tension réelle de ce rayon est d'abord réalisée, avant ou pendant la fixation, mais avant la rotation automatique, une détermination des tours d'un écrou de rayon relié au rayon est effectuée qui est nécessaire pour obtenir une tension prédéfinie et, pendant la fixation, la rotation automatique de cet écrou de rayon est réalisée.

13. Procédé selon une des revendications 10 à 12, dans lequel, pour la fixation du rayon, un dispositif selon une des revendications 1 à 7 est utilisé.
